# EUROPEAN PATENT SPECIFICATION

(11) **EP 1 993 231 B1**
(45) Date of publication and mention of the grant of the patent: **15.05.2013**
(21) Application number: 07711055.9
(22) Date of filing: 06.03.2007
(51) Int. Cl.: H04L 12/24

(54) **ALLOCATION METHOD, SYSTEM AND DEVICE FOR NETWORK RESOURCE IN COMMUNICATION NETWORK**
ZUTEILUNGSVERFAHREN, SYSTEM UND EINRICHTUNG FÜR NETZWERKBETRIEBSMITTEL IN EINEM KOMMUNIKATIONSNETZWERK
PROCÉDÉ, SYSTÈME ET DISPOSITIF D'AFFECTATION POUR RESSOURCES RÉSEAU DANS UN RÉSEAU DE COMMUNICATIONS

(30) Priority: 06.03.2006 CN 200610056740
(43) Date of publication of application: 19.11.2008
(73) Proprietor: Huawei Technologies Co., Ltd., Shenzhen, Guangdong Province 518129 (CN)
(72) Inventor: SHI, Xin, Shenzhen Guangdong Province 518129 (CN)
(74) Representative: Pfenning, Meinig & Partner GbR
(86) International application number: PCT/CN2007/000723
(87) International publication number: WO 2007/101403

(56) References cited:
- EP-A- 1 250 022
- CN-A- 1 598 850
- CN-A- 1 601 976
- US-A1- 2001 027 484
- US-A1- 2005 083 840

## Description

### Field of the Invention

The present invention relates to the field of a resource guarantee technology in the communication network, and in particular to a method, a system, a device for allocating network resources in the communication network.

### Background of the Invention

In the communication network, the usage of network resources varies momently. Sometimes the utilization rate is high and sometimes the utilization rate is low. When a lot of resources are not in use, the resources are wasted greatly, which causes a great loss for the network service provider.

Since users subscribe for the Service Level Agreement (SLA) with the network service provider and the SLA is a formal agreement on providing different levels of services between the user and the network service provider and between network service providers, the network service provider provides services for users in different levels via SLA and ensures that the quality of service meets the rules of SLA. If the quality of service does not satisfy the SLA, the network service provider may compensate, discount, and apologize to users according to the rules of the SLA. In the existing solution, a user can only obtain the service with the level predetermined in SLA but can not freely select services with desired levels. The services with the fixed levels are inconvenient for users. For operators, the network resources in an idle state can not be utilized adequately with the SLA.
EP patent application EP 1250022A, discloses a method which introduces a intra- and inter-domains SLA's. Firstly, the SLA's are specified, negotiated and finally agreed both between the user's and their service providers and between service provider's SLA's, then the policies that govern the access and the control of the Qos resources in the network domains are derived from the intra- and inter-domains SLA's by the controller, wherein the policies including selection and allocation of the network resources so as to transmit the data stream with the selected quality of service. And the policy decisions are then enforces during the Qos management including resource access control and traffic handling and conditioning.

Therefore, there is a need for a solution which can allocate the network resources dynamically for users according to the usage of the network resources so as to improve the utilization rate of the network resources.

### Summary of the Invention

An embodiment of the present invention provides a method, a system, a device for allocating network resources in the communication network to allocate the network resources for users dynamically according to the usage of the network resources so as to improve the utilization rate of the network resources.

One embodiment of the invention provides a method for allocating network resources, including:

obtaining a current network performance parameter and preset service SLA, from a user SLA database which stores the SLAs subscribed by users with a network service provider, wherein the current network performance parameter is monitored at network side and comprises: a performance parameter of an access device in a cell of the user terminal, a performance parameter of a bearer network and a performance parameter of an application server corresponding to the user service;

selecting service levels corresponding to the current network performance parameter from a preset resource usage strategy according to the current network performance parameter, and selecting items of service levels which are equal to or higher than service levels defined in the service SLA from selected service levels;

sending the selected service levels to a user terminal for negotiation;

allocating network resources for a user service according to the service level selected by the user terminal.

Another embodiment of the invention provides a system for allocating network resources, including:

a performance collecting device adapted to obtain a current network performance parameter, wherein the current network performance parameter comprises: a performance parameter of an access device in a cell of the user terminal, a performance parameter of a bearer network and a performance parameter of an application server corresponding to the user service;

a user SLA database adapted to store a service SLA subscribed by a user with a network service provider;

a strategy database adapted to store a resource usage strategy including the network performance parameter and a service level corresponding to the network performance parameter; and

a negotiation device adapted to obtain the service SLA and the resource usage strategy from the user SLA database and the strategy database respectively and select, from the resource usage strategy, the service level which is equal to or higher than the service level in the service SLA subscribed by the user with the network service provider according to the current network performance parameter, and then send the service level selected to an application server controller;

the application server controller adapted to send the service level selected by the negotiation device to a user terminal for negotiating and allocate network resources to the user according to the service level obtained via the negotiation with the user terminal.

Another embodiment of the invention provides a negotiation device, including:

an obtaining module adapted to obtain a current network performance parameter, a service SLA and a resource usage strategy, wherein the service level is obtained from a user SLA database which stores the SLAs subscribed by users with a network service provider, wherein the current network performance parameter comprises: a performance parameter of an access device in a cell of the user terminal, a performance parameter of a bearer network and a performance parameter of an application server corresponding to the user service;

a processing module adapted to select, from the resource usage strategy, a service level which is equal to or higher than a service level in the service SLA subscribed by the user with the network service provider according to the current network performance parameter, and send the selected service level for negotiating with a user terminal about the service level.

According to the technical solution provided in the embodiment of the invention, since the network resources are monitored in real time, a time range in which the utilization rate of network is improved may be extended to a time range including all the periods of time at which the utilization rate of network is low, without being limited in a fixed time period.

The service provider may provide preferential service information for the time at which the utilization rate of network resource is low to the user actively and negotiate with the user. Therefore, the utilization rate of network resources is improved.

If the user wants to use the service with a level higher than the fixed level of the SLA, or want to know whether preferential information for the level of service subscribed by the user exists, the user may initiate a negotiation to enjoy different preferential services.

The network resources are allocated dynamically and a corresponding pricing and charging are performed according to the utilization of network resources. When the utilization rate of network resources is low, the pricing is decreased for the same resource configuration service; and when the utilization rate of the network resources increases, the pricing is increased for the same resource configuration service. Different users may pay different money for the same level of service due to the different time order. Thus, the users may be prevented from using network resources excessively in the time period of preferential price and the network is prevented from overuse.

### Brief Description of the Drawings

Next, the present invention will be described in detail with reference to embodiments and accompanying drawings. It should be understood that the following descriptions are examples of the invention only which can not limit the scope of the invention, in which:

Figure 1 is a schematic diagram illustrating the structure of the system for allocating network resources; and

Figure 2 is a flow chart illustrating the method according to the first embodiment of the invention.

### Detailed Description of the Embodiments

In an existing solution, the usage of network is divided into "the peak period" and the "non-peak period". During the "non-peak period", the number of users is reduced and many network resources are unoccupied. At present, the network service provider makes a lower pricing for services in the non-peak period to attract users, in order to improve the utilization rate of network resources. The technical solution lies in that: in a fixed time period, more network resources are allocated to a user terminal from the network side, and less charge is recorded for the user terminal by a charging system.

In the existing solution, the time period in which the utilization rate of network resources increases is only limited to the so-called fixed "non-peak period". However, the condition of the network is unexpectable in most situations, and the time at which the low utilization rate occurs may not be within the fixed "non-peak period". The everyday peak period may not appear at a fixed time. Therefore, the so-called fixed non-peak period which is determined artificially and generally may not be accurate enough for indicating the variation of network resources in time.

In the existing solution, the user may only select a fixed level of SLA service when no sales promotion is provided from the network side, and the user may not request a higher level of service when the utilization rate of the network resource is low. Thus, the network resources are wasted, and the differential service may not be provided dynamically for users according to the condition of the network.

Since the preferential service with the same price is provided to all users during the so-called fixed "non-peak period", the network may be used by many users and further the so-called "non-peak period" may become the "peak period" , and the network congestion occurs. However, in the conventional technical solution, a technical solution which may be used to alleviate the congestion has not been disclosed.

In addition, in the existing solution, the device of the network service provider may not notify the user terminal of the preference information in time when the utilization rate of network resource is low, and the network resources are wasted.

Embodiments of the invention provide a solution to adjust the utilization rate of network resources dynamically. In the solution, the network resources are allocated dynamically based on the SLA and the condition of the network resources.

When the utilization rate of network resources is low, according to the network status, competitive prices are set for services with different levels to be provided to users at the network side, and the negotiation between the network side and the users is started. A resource usage strategy with the service level higher or equal to the service level subscribed in the SLA is provided to the user. The resource usage strategy includes the service level, the service price, the service time and so on. The network resources are allocated to users based on the negotiated resource usage strategy. Thus, the users are attracted to use the network to increase the utilization rate of network resources. When the utilization rate of network resources increases gradually, the resources usage strategy including the service level, the service price, the service time and so on, which will be provided to users, can be adjusted dynamically. Thereby, the usage of network resources is adjusted for users to avoid a fast change from the low utilization rate to the network congestion.

The solution according to the embodiment of the invention is implemented based on the SLA subscribed by users with the network service provider. In other words, the lowest level of service which is provided for users by the network service provider is the service level in the SLA, and the price for the level of service may be further limited to a price which is not higher than the price set in the SLA. Furthermore, the length of the level of service may be limited. In addition, since the network service provider provides to users the service with the level which may be higher than the service level in the SLA, the requests of users can be satisfied more flexibly and the utilization rate of the network resources can be further improved.

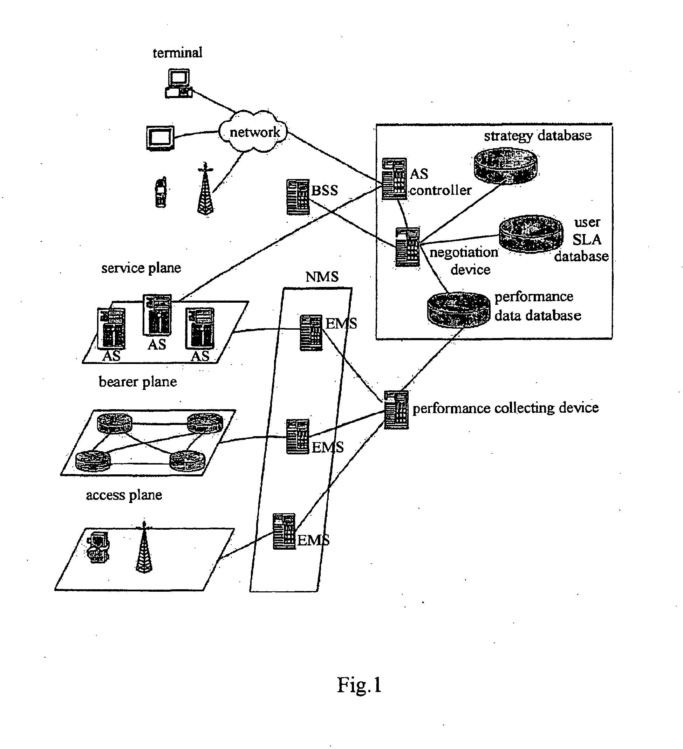

The structure of the system for allocating network resources and the connection relationship between the system and the communication network according to the embodiment of the invention are shown in the Figure 1. Referring to Figure 1, the system for allocating network resources according to the embodiment of the invention includes the following.

A performance collecting device is adapted to collect information on utilization of the network resources (such as the performance information of each network element) and make a preparation for a negotiation between a negotiation device and the users. The collecting may be performed as scheduled or at any moment;

A user SLA database is adapted to store the SLAs subscribed by the user with the network service provider. The service provider may determine the service levels to be provided to users and judge whether the service levels reach the levels predefined in the SLA based on these agreements.

A strategy database is adapted to store resource usage strategies including the network performance parameter and the service level corresponding to the network performance parameter.

A negotiation device is adapted to obtain the information of user SLA from the user SLA database and obtain the resource usage strategy from the strategy database, select a resource usage strategy in which the selected service level is equal to or higher than the service level predefined in the user SLA from these resource usage strategies according to current network performance parameter, generate a service bill based on the resource usage strategy, send the service bill to the user, and negotiate with the user for employing the service with the level that is requested by the user. The network resource is allocated via an Application Server (AS) controller and the charging is performed for the user service with the Business Support System (BSS) according to the negotiation result.

The AS controller is adapted to provide a negotiated access for the user and control the AS to allocate the negotiated network resources to the user.

The system may further include a BSS which is adapted to charge for the service of the user according to the negotiated network resource usage strategy, under the control of the negotiation device or the AS controller.

The system may also include a performance data database adapted to store the information on the condition of network resources collected and sent by the performance collecting device. And the negotiation device obtains the information on the condition of network resources from the performance data database.

A communication network connected to the system for allocating network resources includes: a user terminal, an access network (access plane), a bearer network (bearer plane), an AS on the service layer (service plane) and an Element Management System (EMS) and a Network Management System (NMS) on each layer or plane (the access plane, the bearer plane and the service plane). The user terminal includes but is not limited to, a mobile phone, a stationary telephone, a computer terminal, or a TV set, and the user terminal is adapted to provide the service or an enquiry service to the user.

The method for allocating network resources according to the embodiment of the invention may include the following processes.

The information on the SLA of the user service and information on the resource usage strategy are preset at network side, and the information on the resource usage strategy includes the network performance parameter and the service level corresponding to the network performance parameter.

A negotiation process is initiated. The current performance parameter of the communication network is monitored at the network side and the information on the SLA of the user service is obtained.

Service levels corresponding to the current network performance parameter are selected from the information of the resource usage strategy; and from the service levels selected, items of service levels which are equal to or higher than the service levels predefined in the user SLA are selected.

The selected service level items are sent to the user terminal for negotiation, and the user terminal selects a service level and returns this service level information to the network side.

At the network side, the network resources are allocated for the user service according to the service level selected by the user terminal.

In the method according to the embodiment of the invention, the negotiation between the network side and the user regarding the service level may be initiated by the user terminal, and may also be initiated from the network side.

In the method according to the first embodiment of the invention, the negotiation is initiated by the user terminal. In other words, if the user wants to use a service with a level higher than the level defined in the SLA, or wants to know whether there is any preference information about the level of service subscribed to by the user, the user initiates, via the user terminal, a request for negotiation between the user terminal and the allocating system. If no special request, the existing processing method will be employed, in other words, the service defined in the SLA will be used directly without negotiation.

When the user terminal initiates a request for negotiation, first, the network service provider may collect information on condition of the network, and then determine, according to the preset resource usage strategies, corresponding price and the duration of the resource usage strategy service for providing the level of service from the levels of the services which may be provided, in connection with the items in user SLAs. Pricing may be performed by the network service provider according to the condition of the network, so that the utilization rate of the network may be adjusted. When the utilization rate of the network increases gradually, the price of service may be increased. But if the user selects a service with the level defined in the SLA, the price of the service with the defined level is not allowed to be higher than the price defined in the SLA. Because the condition of the network varies, it is difficult to guarantee a high quality service for a long time for the user. The longer the time is, the higher the price may be, therefore, a time length during which the service with the level selected by the user can be kept needs to be provided. Secondly, the network service provider sends the information of resource usage strategies to the user terminal, and the user selects a resource usage strategy with a service level which may be higher than the service level defined in the SLA or may be the level defined in the SLA. The user may refuse to use a service because there is not any service level required by the user or the user deems that the required service level has an exorbitant price. Finally, the network side allocates resources for the service of the user according to the service level which is selected by the user and serves the user.

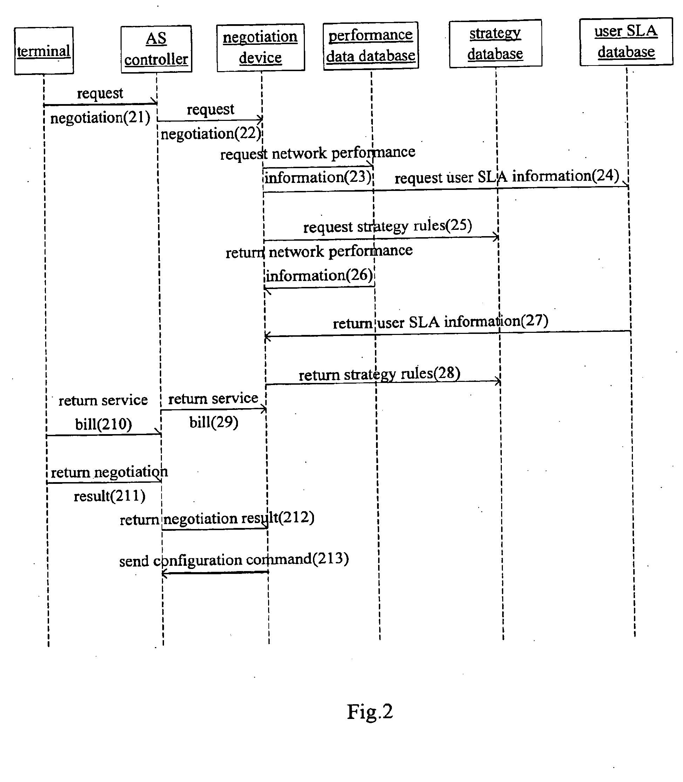

Figure 2 is a flow chart of the method according to the first embodiment of the invention. Referring to Figure 2, the negotiation in the embodiment is initiated by the user terminal and includes the following processes.

In process 21, the user sends a negotiation request message to the AS controller via the user terminal. The negotiation request message includes a field showing the type of the message which indicates that this message is used for negotiation. And the negotiation request message further includes the user ID, the cell ID of the user and information about the service type requested by negotiation. The negotiation request message may be sent in real time, such as via a short message, or may be sent by logging in a network or by a TV set which is playing programs, and also may be sent via other communication methods to the AS controller. The opportunity for sending the negotiation request includes: the case when the user wants to use a service with a level different from the level defined in the SLA, and the case when the user wants to query whether there is any information about preference on the service with the level the user subscribed.

In process 22, the AS controller forwards the message to the negotiation device after determining that this message is a negotiation request message via an analysis of the received message type field.

In processes 23∼25, after receiving the negotiation request message, the negotiation device determines that the message is a negotiation request message via a filtering module of the negotiation device and extracts the user ID, the cell ID of the user and information about the service type from the negotiation request message via a processing module of the negotiation device. An obtaining module of the negotiation device sends a network performance parameter obtaining message to a performance data database for requesting to obtain the performance parameter of the AS which the type of service pertains to, the performance parameter of the bearer network, and the performance parameter of the access device of the user cell. This obtaining command includes information of the user cell ID and the type of the service. The obtaining module sends a message including the user ID to the user SLA database for obtaining the information of the user SLA. The obtaining module also sends a message to the strategy database for obtaining the resource usage strategy.

In processes 26∼28, if it is determined that the received message is a message for requesting the performance data, the performance data database is searched for the performance parameter of the corresponding access device of the user cell, the performance parameter of the AS which the type of service pertains to and the performance parameter of the bearer network according to the information of the user cell ID and type of the service, and all searched performance parameters are returned to the negotiation device via a response message to generate a service bill containing different service levels. The response message includes a message type field, a filed for indicating the number of the network element device and various searched performance data. If it is determined that the message is a message for requesting the user SLA information, the user SLA information is extracted from the user SLA database according to the user ID and a message carrying the SLA information, which includes the message type field, the user ID field and the SLA information, is sent to the negotiation device to generate a service bill containing different service levels. If it is determined that the received message is a message for requesting the user SLA information, a resource usage strategy is extracted from the strategy database and a message carrying the resource usage strategy is returned to the negotiation device. In the returned message, the message type field indicates that the message is a message contains the resource usage strategy.

In process 29, after determining the type of the message according to the message field, the filtering module of the negotiation device extracts the necessary information, and the processing module generates the service level bill containing different service levels according to the network performance information, user SLA information, resource usage strategy information and some historical information, and sends the service level bill to the AS controller.

The network performance information may include the performance parameters, such as utilization rate of the network element processor, utilization rate of the memory, throughput, device failure, interruption condition, Bit Error Ratio, transmission delay, packet loss rate, load of the device and response time, and may also include the number of users and the increase rate of users. The information of user SLA includes the transmission bandwidth, priority, packet loss ratio and transmission delay. The processing module of the negotiation device collects the information on condition of the network resource for analyzing, extracts key information and stores the key information in the form of variables. For example, the utilization rate of CPU is expressed by *cpu_used*, the throughput is expressed by variable *throughput,* the number of users is expressed by *user_no,* the increase rate of the users is expressed by *increase,* the packet loss ratio is expressed by *loss,* and the delay is expressed by variable *delay.* The processing module of the negotiation device also analyzes the information of the user SLA and extracts the key information from the information of the user SLA. For example, the bandwidth is expressed by variable *band_width,* the priority is expressed by *prior.* The network performance parameters are not limited in the above examples. After these parameters are stored in the memory, the resource usage strategies are used to determine what service bill should be provided to the user.

The strategy database may include a plurality of resource usage strategies and each of the resource usage strategies may include: network performance parameter condition, service level parameter, and corresponding price, time length and priority information. The network performance parameter condition may further include specific performance parameter condition of multiple network elements. For example, the performance parameters of the AS are shown in table 1, the performance parameters of the bearer network are shown in table 2 and the performance parameters of the access gateway are shown in table 3.

**Table 1**

| Number | Utilization rate of CPU | Throughput | Number of users | Increase rate |
|---|---|---|---|---|
| 1 | 0%<cpu_used<=20% | 0%<throughput<=30% | 0<user_no<=2000 | 10%<increase<=15% |
| 2 | 20%<cpu_used<=30% | 20%<throughput<=40% | 1500<user_no<= 2500 | 5%<increase<=10% |
| 3 | 30%<cpu_used<=40% | 35%<throughput<=50% | 2500<user_no<= 3500 | 10%<increase<=15% |
| 4 | 30%<cpu_used<=40% | 35%<throughput<=50% | 3000<user_no<= 3500 | 5%<increase<=10% |
| oooooo | oooooo | oooooo | oooooo | oooooo |

**Table 2**

| Number | Utilization rate of CPU | Throughput | Number of users | Increase rate |
|---|---|---|---|---|
| 1 | 0%<cpu_used <=20% | 0%<throughput<=30% | 0<user_no <=100 | 10%<increase<=15% |
| 2 | 20%<cpu_used <=30% | 20%<throughput<=40% | 150<user_no <=200 | 5%<increase<=10% |
| 3 | 30%<cpu_used <=40% | 35%<throughput<=50% | 200<user_no <=300 | 10%<increase<=15% |
| 4 | 30%<cpu_used <=40% | 35%<throughput<=50% | 300<user_no <=350 | 5%<increase<=10% |
| oooooo | oooooo | oooooo | oooooo | oooooo |

**Table 3**

| Number | Throughput | Packet loss rate | Transmission delay(ms) | Bit error rate |
|---|---|---|---|---|
| 1 | 10%<throughput<=2 0% | 0%<loss<=0.0001 % | 0<delay<=1.0 | 0%<error<=0.001 % |
| 2 | 20%<throughput<=3 0% | 0.0001 %<loss<=0.0002 % | 1.0<delay<=1 .5 | 0.001 %<error<=0.0012 % |
| 3 | 30%<throughput<=4 0% | 0.0002%<loss<=0.0002 5% | 1.5<delay<=1 .8 | 0.0012%<error<=0.001 4% |
| 4 | 40%<throughput<=5 0% | 0.00025%<loss<=0.000 3% | 1.8<delay<=2 .0 | 0.0014%<error<=0.001 5% |
| oooooo | oooooo | oooooo | oooooo | oooooo |

The examples of the multiple resource usage strategies are shown in the following table 4.

**Table 4**

| number of AS performance parameter | Number of access gateway performance parameter | number of bearer network performance parameter | Bandwidth | Priority | Price | Time Length (minute) |
|---|---|---|---|---|---|---|
| 2 | 1 | 2 | 1 | 2 | 0.06 | 30 |
| 2 | 1 | 2 | 1.5 | 1 | 0.1 | 25 |
| 2 | 1 | 2 | 2 | 3 | 0.12 | 20 |
| 2 | 1 | 2 | 2 | 1 | 0.15 | 20 |
| oooooo | oooooo | | oooooo | oooooo | oooooo | oooooo |
| 3 | 1 | 2 | 1 | 2 | 0.07 | 30 |
| 3 | 1 | 2 | 1 | 3 | 0.06 | 30 |
| 3 | 1 | 2 | 1.5 | 1 | 0.1 | 20 |
| 3 | 1 | 2 | 1.5 | 2 | 0.1 | 20 |
| 3 | 1 | 2 | 2 | 1 | 0.2 | 15 |
| oooooo | oooooo | | oooooo | oooooo | oooooo | oooooo |

Referring to table 4, the number of AS performance parameter, the number of bearer network performance parameter and the number of bearer network performance parameter are the network performance parameter conditions, the bandwidth is a service level parameter, and the higher the value of the bandwidth is, the higher the service level is.

Table 5 provides an example of the user SLA information. Referring to table 5, the user SLA information includes: service level (i.e. bandwidth), priority, price, time length and so on.

**Table 5**

| User ID | Bandwidth (M) | Priority | Price (yuan /minute) |
|---|---|---|---|
| 1 | 1 | 1 | 0.1 |
| 2 | 2 | 1 | 0.15 |
| 3 | 1 | 2 | 0.07 |
| 4 | 1.5 | 1 | 0.12 |
| oooooo | oooooo | oooooo | oooooo |

The process for generating a service bill by the negotiation device will be described with examples as below.

After the negotiation device collects the information of resource usage strategy, network performance and user SLA, for example, the data of network performance of the user cell is: cpu_used=18%, throughput=25%, user_no=90, increase=15%; the data of the bearer network performance is: throughput=25%, loss=0.00015%, delay=1.5, error=0.0012%; the AS performance data is: cpu_used=22%, throughput=35%, user_no=2003, increase=7%, and the SLA information of a user is: user ID=3, bandwidth=1, prior=2, price=0.07, the resource usage strategies are as shown in tables 1 to 4. The above data information is compared with the data in resource usage strategies, and items of service levels in the resource usage strategies which satisfy the conditions are extracted to generate a service level bill. The service levels in the bill are equal to or higher than service levels defined in the user service SLA, and the prices in the bill are lower than or equal to the prices corresponding to the same service levels in the user SLA. The specific items are shown in table 6.

**Table 6**

| Bandwidth | Priority | Price | Length |
|---|---|---|---|
| 1 | 2 | 0.06 | 30 |
| 1.5 | 1 | 0.1 | 25 |
| 2 | 3 | 0.12 | 20 |
| 2 | 1 | 0.15 | 20 |
| oooooo | oooooo | oooooo | oooooo |

The service level item bill includes, but is not limited to, service level (i.e. bandwidth), priority, price and the time length for providing the service with the level. The content of an item in the service level bill represents the service level defined in the SLA corresponding to the service of the user. Because the embodiment of the present invention is based on the SLA, the item in the service bill is required and the user may take the item as a reference for comparing.

When the network resources are abundant, the price corresponding to the service level defined in the resource usage strategy may be lower than the price in the SLA so as to attract the user to use the network resources. When the price is lower than the price in the SLA, a time length may be set according to the condition of network. When the price corresponding to the service level is equal to the price defined in the SLA, the length of the service is unlimited because this is the content of the SLA which was subscribed by the user with the service provider. Other service level items are set by the negotiation device according to relevant information. After the service level bill is generated, the negotiation device sends a message carrying the bill to the AS controller.

In process 210, the AS controller determines that the message is a message carrying the service level bill according to the message type field and uses a specific message to forward the service level bill to the user terminal.

In process 211, the user terminal determines that the received message is a message carrying the service level bill according to the message type field and displays the information of the service level bill (such as the information shown in table 6) to the user. The user selects a service level item or refuses the service via the user terminal. The user terminal sends the information of the service level item selected by the user to the AS controller. The content of the information may be a flag indicating the selected service level item or be the item of all service levels which are selected.

In process 212, the AS controller determines that the message is a message carrying the service level item selected by the user, and then forwards this service level item message to the negotiation device. The content of the information may be a flag indicating the selected service level item or be the item of all service levels which are selected.

In process 213, the negotiation device determines that the received message is a message carrying the service level item according to the message type field, and the processing module of the negotiation device converts the information of negotiated service level item into commands for resource configuration, and sends the resource configuration commands to the AS controller. The AS controller executes the resource configuration commands to allocate network resources, so that the selected service level is provided for the user. Alternatively, the negotiation device may send the price information in the service level item selected by the user to a BSS and the BSS performs the subsequent charging.

As an another embodiment, in processes 212 and 213, the AS controller may directly convert the information of service level item selected and sent by the user into the resource configuration commands to allocate resources directly, and the AS controller also sends the price information in the service level item selected by the user to the BSS for charging.

When the time length corresponding to the service level selected by the user is coming to the end, if the user terminal is still using the service, the network side will initiate a negotiation with the user. The negotiation device configures a timer for each user using the service. When the time length of the user service in coming to the end (for example, in one minute), the negotiation device automatically negotiates with the user about the service level. If the condition of network resources does not change, the service level bill needs not to be regenerated and the user may keep using the selected service. If the condition of the network resources changes greatly, the negotiation device needs to regenerate a service level bill. If current utilization rate of network resources increases to a preset value when the time length ends, in order to regenerate a service level bill, the service level items whose service levels are equal to or higher than the service levels defined in the user service SLA are selected from the resource usage strategies, and the service level items whose the prices are higher than or equal to the price corresponding to the level of service provided in the previous time period are selected, and the service level bill is generated with the selected service level items.

In the method according to the second embodiment of the invention, a negotiation is initiated by the negotiation device at the network side. In the method, a timer is configured on the negotiation device and the condition of network resources is monitored periodically, in other words, the current network performance parameters are obtained from the performance data database at the network side and if the utilization rate of the network is lower than a preset value, a service level bill containing service preference information is generated automatically and sent to the user so as to attract the user to use the services. Thus, the utilization rate of the network resource can be improved.

The procedure of this embodiment is similar to the procedure in processes 23 to 213 of the first embodiment. The difference lies in that: in the process of requesting the network performance parameter, the performance data of the access devices in all cells is requested by the negotiation device in this embodiment, while in the first embodiment, only the performance data of the access device in the user cell is requested during the user initiating the negotiation.

In the embodiment of the invention, the network side may also time the service for the user according to the time length corresponding to the service level selected by the user terminal. If the time is over, the network side uses the service level defined in the user service SLA to re-allocate the network resources for the user service.

The time length set in the resource usage strategy described in the embodiment of the invention may be associated with the condition of network resources and other factors, for example, the time length is associated with a time length for using service used by a normal user. If a time length for using a service by the normal user is 15 minutes, the service provider may set the time length as 20 minutes. In the 20 minutes, the quality of service need to be guaranteed to achieve the level defined in the SLA. Optionally, the user may define a time length. If the defined time length is relatively long, the price of the service with the service level may be higher, because the condition of the network varies momently and it is difficult to guarantee the service level with a high quality for a long time. The service provider may use a high price strategy to prevent the user from overusing the network, and therefore, push the user to subscribe for a shorter service. And the price may also be set lower to further attract users to use the service. After the user terminal receives the service bill, the negotiation action may be executed by the user manually or may be executed automatically via the software in the user terminal with the need of performing corresponding configurations in the software by the user.

The above descriptions merely are the preferred embodiments of the invention, the protective scope of the invention does not limit to this. Any modifications and alternations to the present invention that can be conceived by those skilled in the art in the disclosed technical scope, the present invention intends to cover them.

## Claims

1. A method for allocating network resources, comprising:
obtaining(23, 24, 26, 27) a current network performance parameter and preset service Service Level Agreement, SLA, from a user SLA database which stores the SLAs subscribed by users with a network service provider, wherein the current network performance parameter is monitored at network side and comprises: a performance parameter of an access device in a cell of the user terminal, a performance parameter of a bearer network and a performance parameter of an application server corresponding to the user service;
selecting (29) service levels corresponding to the current network performance parameter from a preset resource usage strategy according to the current network performance parameter, and selecting items of service levels which are equal to or higher than service levels defined in the service SLA from selected service levels and sending (210) the selected service level items to a user terminal for negotiation; and
allocating (212, 213) network resources for a user service according to the service level selected by the user terminal.

2. The method according to claim 1, wherein the obtaining the preset service SLA further comprises:
parsing a user ID from a negotiation request initiated by the user terminal, and obtaining the service SLA corresponding to the user ID.

3. The method according to claim 1, wherein the obtaining the current network performance parameter and the service SLA further comprises:
obtaining the current network performance parameter periodically, and obtaining the service SLA from the preset service SLA when a utilization rate of network is lower than a preset value.

4. The method according to claim 1, further comprising:
setting a corresponding price for each service level in the resource usage strategy;
after allocating network resources for the user service according to the service levels selected by the user terminal, further comprising:
charging for the user service according to the price corresponding to the service level selected by the user terminal.

5. The method according to claim 4, further comprising:
selecting, from the selected service levels which are equal to or higher than service levels defined in the service SLA , service levels whose prices are lower than or equal to a price corresponding to the service level in the service SLA.

6. The method according to claim 4, further comprising:
setting a time length for each service level in the resource usage strategy;
after allocating the network resources for the user service according to the service level selected by the user terminal, timing the user service according to the time length corresponding to the service level selected by the user terminal; when the time is over, using the service level defined in the service SLA to re-allocate the network resources for the user service.

7. The method according to claim 4, further comprising:
setting a time length for each service level in the resource usage strategy;
after allocating the network resources for the user service according to the service level selected by the user terminal, timing the user service according to the time length corresponding to the service level selected by the user terminal; if a variation of the condition of the network resources exceeds a preset value, after the time is over, selecting service levels corresponding to the network performance parameter from the resource usage strategy and selecting service levels which are equal to or higher than the service level defined in the service SLA.

8. The method according to claim 6 or 7, further comprising:
if the utilization rate of network resources reaches a preset value, when the time is over, selecting, from the selected service levels which are equal to or higher than the service levels defined in the SLA, service levels whose prices are higher than or equal to the price corresponding to the level of service provided in a previous time period.

9. The method according to claim 1-8, wherein before the process of obtaining, comprises :
presetting, at network side, the information on the SLA of user service and information on the resource usage strategy, wherein the information on the resource usage strategy comprises the network performance parameter and the service level corresponding to the network performance parameter; and the process of obtaining a current network performance parameter comprises:
monitoring, at network side, the current performance parameter of the communication network.

10. The method according to claim 9, further comprising:
selecting, by the user terminal, a service level item from the received service level items, and returning the selected level item.

11. A system for allocating network resources, comprising:
a performance collecting device adapted to obtain a current network performance parameter, wherein the current network performance parameter comprises: a performance parameter of an access device in a cell of the user terminal, a performance parameter of a bearer network and a performance parameter of an application server corresponding to the user service;
a user Service Level Agreement, SLA, database adapted to store a service SLA subscribed by a user with a network service provider;
a strategy database adapted to store a resource usage strategy comprising the network performance parameter and a service level corresponding to the network performance parameter; and
a negotiation device adapted to obtain the service SLA and the resource usage strategy from the user SLA database and the strategy database respectively and select, from the resource usage strategy, the service level which is equal to or higher than the service level in the service SLA subscribed by the user with the network service provider according to the current network performance parameter, and then send the service level selected to an application server controller;
the application server controller adapted to send the service level selected by the negotiation device to a user terminal for negotiating and allocate network resources to the user according to the service level obtained via the negotiation with the user terminal.

12. The system for allocating network resources according to claim 11, wherein the application server controller is further adapted to send the service level which is obtained via the negotiation with the user terminal to the negotiation device;
the negotiation device is adapted to generate a resource configuration command according to the service level which is obtained via the negotiation with the user terminal and send the resource configuration command to the application server controller;
and the application server controller is adapted to allocate network resources for users according to the resource configuration command.

13. The system for allocating network resources according to claim 11, further comprising:
a Business Support System, BSS, adapted to charge for the user service according to the service level negotiated, under the control of the application server controller.

14. The system for allocating network resources according to claim 12, further comprising:
a Business Support System, BSS, adapted to charge for the user service according to the service level negotiated, under the control of the negotiation device,

15. The system for allocating network resources according to any one of claims 11 to 14, further comprising:
a performance data database adapted to store the current network performance parameter obtained by the performance collecting device; and the negotiation device is further adapted to obtain the current network performance parameter from the performance data database,

16. A negotiation device, comprising:
an obtaining module adapted to obtain a current network performance parameter, a service Service Level Agreement, SLA and a resource usage strategy, wherein the service level is obtained from a user SLA database which stores the SLAs subscribed by users with a network service provider, wherein the current network performance parameter comprises: a performance parameter of an access device in a cell of the user terminal, a performance parameter of a bearer network and a performance parameter of an application server corresponding to the user service;
a processing module adapted to select, from the resource usage strategy, a service level which is equal to or higher than a service level in the service SLA subscribed by the user with the network service provider according to the current network performance parameter, and send the selected service level for negotiating with a user terminal about the service level.

17. The negotiation device according to claim 16, wherein,
the processing module is further adapted to generate a resource configuration command according to the service level which is obtained via the negotiation with the user terminal and send the resource configuration command to an application server controller.

## Patentansprüche

1. Verfahren zum Vergeben von Netzbetriebsmitteln, umfassend:
Erhalten (23, 24, 26, 27) eines aktuellen Netzleistungsfähigkeitsparameters und der voreingestellten Service Level Agreement, SLA, des Dienstes aus einer Benutzer-SLA-Datenbank, die die von Benutzern bei einem Netzdienstanbieter subskribierten SLA speichert, wobei der aktuelle Netzleistungsfähigkeitsparameter auf der Netzseite überwacht wird und Folgendes umfasst:
einen Leistungsfähigkeitsparameter einer Zugangseinrichtung in einer Zelle des Benutzerendgeräts, einen Leistungsfähigkeitsparameter eines Trägernetzes und einen Leistungsfähigkeitsparameter eines Anwendungsservers, der dem Benutzerdienst entspricht;
Auswählen (29) von Dienstniveaus, die dem aktuellen Netzleistungsfähigkeitsparameter entsprechen, aus einer voreingestellten Betriebsmittelauslastungsstrategie gemäß dem aktuellen Netzleistungsfähigkeitsparameter und Auswählen von Posten von Dienstniveaus, die höher oder gleich Dienstniveaus sind, die in der Dienst-SLA definiert sind, aus ausgewählten Dienstniveaus und Senden (210) der ausgewählten Dienstniveauposten zu einem Benutzerendgerät zur Aushandlung; und
Vergeben (212, 213) von Netzbetriebsmitteln für einen Benutzerdienst gemäß dem durch das Benutzerendgerät ausgewählten Dienstniveau.

2. Verfahren nach Anspruch 1, wobei das Erhalten der voreingestellten Dienst-SLA ferner Folgendes umfasst:
Parsen einer Benutzer-ID aus einer durch das Benutzerendgerät eingeleiteten Aushandlungsanforderung und Erhalten der Dienst-SLA, die der Benutzer-ID entspricht.

3. Verfahren nach Anspruch 1, wobei das Erhalten des Parameters der aktuellen Netzleistungsfähigkeit und der Dienst-SLA ferner Folgendes umfasst:
periodisches Erhalten des Parameters der aktuellen Netzleistungsfähigkeit und Erhalten der Dienst-SLA aus der voreingestellten Dienst-SLA, wenn eine Auslastungsrate des Netzes kleiner als ein voreingestellter Wert ist.

4. Verfahren nach Anspruch 1, ferner umfassend:
Setzen eines entsprechenden Preises für jedes Dienstniveau in der Betriebsmittelauslastungsstrategie;
ferner umfassend nach dem Vergeben von Netzbetriebsmitteln für den Benutzerdienst gemäß den durch das Benutzerendgerät ausgewählten Dienstniveaus:
Berechnen von Gebühren für den Benutzerdienst gemäß dem Preis, der dem durch das Benutzerendgerät ausgewählten Dienstniveau entspricht.

5. Verfahren nach Anspruch 4, ferner umfassend;
Auswählen von Dienstniveaus, deren Preise kleiner oder gleich einem Preis sind, der dem Dienstniveau in der Dienst-SLA entspricht, aus den ausgewählten Dienstniveaus, die höher oder gleich in der Dienst-SLA definierten Dienstniveaus sind.

6. Verfahren nach Anspruch 4, ferner umfassend:
Setzen einer Zeitlänge für jedes Dienstniveau in der Betriebsmittelauslastungsstrategie;
Timen des Benutzerdienstes gemäß der Zeitlänge, die dem durch das Benutzerendgerät ausgewählten Dienstniveau entspricht, nach dem Vergeben der Netzbetriebsmittel für den Benutzerdienst gemäß dem durch das Benutzerendgerät ausgewählten Dienstniveau; und wenn die Zeit vorüber ist, Verwenden des in der Dienst-SLA definierten Dienstniveaus zum Neuvergeben der Netzbetriebsmittel für den Benutzerdienst.

7. Verfahren nach Anspruch 4, ferner umfassend:
Setzen einer Zeitlänge für jedes Dienstniveau in der Betriebsmittelauslastungsstrategie;
Timen des Benutzerdienstes gemäß der Zeitlänge, die dem durch das Benutzerendgerät ausgewählten Dienstniveau entspricht, nach dem Vergeben der Netzbetriebsmittel für den Benutzer gemäß dem durch das Benutzerendgerät ausgewählten Dienstniveau; wenn eine Schwankung des Zustands der Netzbetriebsmittel einen voreingestellten Wert übersteigt und nachdem die Zeit vorüber ist, Auswählen von Dienstniveaus, die dem Netzleistungsfähigkeitsparameter entsprechen, aus der Betriebsmittelauslastungsstrategie und Auswählen von Dienstniveaus, die höher oder gleich dem in der Dienst-SLA definierten Dienstniveau sind.

8. Verfahren nach Anspruch 6 oder 7, ferner umfassend:
wenn die Auslastungsrate der Netzbetriebsmittel einen voreingestellten Wert erreicht und wenn die Zeit vorüber ist, Auswählen von Dienstniveaus, deren Preise höher oder gleich dem Preis sind, der dem in einem vorherigen Zeitraum bereitgestellten Dienstniveau entspricht, aus den ausgewählten Dienstniveaus, die höher oder gleich den in der SLA definierten Dienstniveaus sind.

9. Verfahren nach Anspruch 1-8, das vor dem Prozess des Erhaltens Folgendes umfasst:
Voreinstellen der Informationen über die SLA des Benutzerdienstes und der Informationen über die Betriebsmittelauslastungsstrategie auf der Netzseite, wobei die Informationen über die Betriebsmittelauslastungsstrategie den Netzleistungsrähigkeitsparameter und das Dienstniveau; das dem Netzleistungsfähigkeitsparameter entspricht, umfassen, und der Prozess des Erhaltens eines aktuellen Netzleistungsfähigkeitsparameters Folgendes umfasst:
Überwachen des aktuellen Leistungsfähigkeitsparameters des Kommunikationsnetzes auf der Netzseite.

10. Verfahren nach Anspruch 9, ferner umfassend:
Auswählen eines Dienstniveaupostens aus den empfangenen Dienstniveauposten durch das Benutzerendgerät und Zurückgeben des ausgewählten Niveaupostens.

11. System zum Vergeben von Netzbetriebsmitteln, umfassend:
eine Leistungsfähigkeits-Sammeleinrichtung, die dafür ausgelegt ist, einen aktuellen Netzleistungsfähigkeitsparameter zu erhalten, wobei der aktuelle Netzleistungsfähigkeitsparameter Folgendes umfasst: einen Leistungsfähigkeitsparameter einer Zugangseinrichtung in einer Zelle des Benutzerendgeräts, einen Leistungsfähigkeitsparameter eines Trägernetzes und einen Leistungsfähigkeitsparameter eines Anwendungsservers, der dem Benutzerdienst entspricht;
eine Datenbank für die Service Level Agreement, SLA, von Benutzern, die dafür ausgelegt ist, eine Dienst-SLA zu speichern, die von einem Benutzer bei einem Netzdienstanbieter subskribiert wird;
eine Strategiedatenbank, die dafür ausgelegt ist, eine Betriebsmittelauslastungsstrategie zu speichern, die den Netzleistungsfähigkeitsparameter und ein Dienstniveau; das dem Netzleistungsfähigkeitsparameter entspricht, umfasst; und
eine Aushandlungseinrichtung, die dafür ausgelegt ist, die Dienst-SLA und die Betriebsmittelauslastungsstrategie aus der Benutzer-SLA-Datenbank bzw. der Strategiedatenbank zu erhalten und gemäß dem aktuellen Netzleistungsfähigkeitsparameter aus der Betriebsmittelauslastungsstrategie das Dienstniveau auszuwählen, das höher oder gleich dem Dienstniveau in der durch den Benutzer bei dem Netzdienstanbieter subskribierten Dienst-SLA ist, und dann das ausgewählte Dienstniveau zu einer Anwendungsserver-Steuerung zu senden;
wobei die Anwendungsserver-Steuerung dafür ausgelegt ist, das durch die Aushandlungseinrichtung ausgewählte Dienstniveau zu einem Benutzerendgerät zu senden, zur Aushandlung und Vergabe von Netzbetriebsmitteln an den Benutzer gemäß dem über die Aushandlung mit dem Benutzerendgerät erhaltenen Dienstniveau.

12. System zum Vergeben von Netzbetriebsmitteln nach Anspruch 11, wobei die Anwendungsserver-Steuerung ferner dafür ausgelegt ist, das Dienstniveau, das über die Aushandlung mit dem Benutzerendgerät erhalten wird, zu der Aushandlungseinrichtung zu senden;
die Aushandlungseinrichtung dafür ausgelegt ist, einen Betriebsmittelkonfigurationsbefehl gemäß dem Dienstniveau zu erzeugen, das über die Aushandlung mit dem Benutzerendgerät erhalten wird, und den Betriebsmittelkonfigurationsbefehl zu der Anwendungsserver-Steuerung zu senden; und die Anwendungsserver-Steuerung dafür ausgelegt ist, Netzbetriebsmittel für Benutzer gemäß dem Betriebsmittelkonfigurationsbefehl zu vergeben.

13. System zum Vergeben von Netzbetriebsmitteln nach Anspruch 11, ferner umfassend:
ein Businesssupportsystem BSS, das dafür ausgelegt ist, gemäß dem ausgehandelten Dienstniveau unter der Kontrolle der Anwendungsserver-Steuerung Gebühren für den Benutzerdienst zu berechnen.

14. System zum Vergeben von Netzbetriebsmitteln nach Anspruch 12, ferner umfassend:
ein Businesssupportsystem BSS, das dafür ausgelegt ist, gemäß dem ausgehandelten Dienstniveau unter der Kontrolle der Aushandlungseinrichtung Gebühren für den Benutzerdienst zu berechnen.

15. System zum Vergeben von Netzbetriebsmitteln nach einem der Ansprüche 11 bis 14, ferner umfassend:
eine Leistungsfähigkeitsdaten-Datenbank, die dafür ausgelegt ist, den durch die Leistungsfähigkeits-Sammeleinrichtung erhaltenen aktuellen Netzleistungsfähigkeitsparameter zu speichern; und die Aushandllungseinrichtung ferner dafür ausgelegt ist, den aktuellen Netzleistungsfähigkeitsparameter aus der Leistungsfähigkeitsdaten-Datenbank zu erhalten.

16. Aushandlungseinrichtung, umfassend:
ein Erhaltemodul, das dafür ausgelegt ist, einen aktuellen Netzleistungsfähigkeitsparameter, eine Service Level Agreement, SLA, des Dienstes und eine Betriebsmittelauslastungsstrategie zu erhalten, wobei das Dienstniveau aus einer Benutzer-SLA-Datenbank erhalten wird, die die von Benutzern bei einem Netzdienstanbieter subskribierten SLA speichert, wobei der aktuelle Notzleistungsfähigkeitsparameter Folgendes umfasst: einen Lcistungsfähigkeitsparameter einer Zugangseinrichtung in einer Zelle des Benutzerendgeräts, einen Leistungsfähigkeitsparameter eines Trägernetzes und einen Leistungsfähigkeitsparameter eines Anwendungsservers, der dem Benutzerdienst entspricht;
ein Verarbeitungsmodul, das dafür ausgelegt ist, aus der Betriebsmittelauslastungsstrategie gemäß dem aktuellen Netzleistungsfähigkeitsparameter ein Dienstniveau auszuwählen, das höher oder gleich einem Dienstniveau in der durch Benutzer bei dem Netzdienstanbieter subskribierten Dienst-SLA ist, und das ausgewählte Dienstniveau zur Aushandlung mit einem Benutzerendgerät über das Dienstniveau zu senden.

17. Aushandlungseinrichtung nach Anspruch 16, wobei das Verarbeitungsmodul ferner dafür ausgelegt ist, einen Betriebsmittelkonfigurationsbefehl gemäß dem Dienstniveau zu erzeugen, das über die Aushandlung mit dem Benutzerendgerät erhalten wird, und den Betriebsmittelkonfigurationsbefehl zu einer Anwendungsserver-Steuerung zu senden.

## Revendications

1. Procédé permettant d'attribuer des ressources réseau, comprenant les étapes suivantes :
obtenir (23, 24, 26, 27) un paramètre de performances réseau courant et un contrat de niveau de service, SLA, de services prédéfinis à partir d'une base de données SLA utilisateur qui stocke les SLA souscrits par des utilisateurs auprès d'un fournisseur de services réseau, le paramètre de performances réseau courant étant contrôlé au niveau d'un côté réseau et comprenant : un paramètre de performances d'un dispositif d'accès dans une cellule du terminal utilisateur, un paramètre de performances d'un réseau support et un paramètre de performances d'un serveur d'applications correspondant au service utilisateur ;
sélectionner (29) des niveaux de service correspondant au paramètre de performances réseau courant à partir d'une stratégie d'utilisation de ressources prédéfinie selon le paramètre de performances réseau courant, et sélectionner les éléments de niveaux de service qui sont égaux ou supérieurs aux niveaux de service définis dans le SLA de service à partir des niveaux de service sélectionnés et envoyer (210) les éléments de niveau de service sélectionnés à un terminal utilisateur pour une négociation ; et
attribuer (212, 213) des ressources réseau pour un service utilisateur selon le niveau de service sélectionné par le terminal utilisateur.

2. Procédé selon la revendication 1, dans lequel l'étape consistant à obtenir le SLA de service prédéfini comprend en outre :
analyser un identifiant utilisateur à partir d'une requête de négociation initiée par le terminal utilisateur, et obtenir le SLA de service correspondant à l'identifiant utilisateur.

3. Procédé selon la revendication 1, dans lequel l'étape consistant à obtenir le paramètre de performances réseau courant et le SLA de service comprend en outre :
obtenir le paramètre de performances réseau courant périodiquement, et obtenir le SLA de service à partir du SLA de service prédéfini lorsqu'un taux d'utilisation du réseau est inférieur à une valeur prédéfinie.

4. Procédé selon la revendication 1, comprenant en outre les étapes suivantes :
fixer un prix correspondant pour chaque niveau de service dans la stratégie d'utilisation de ressources ;
après avoir attribué des ressources réseau pour le service utilisateur selon les niveaux de service sélectionnés par le terminal utilisateur, comprenant en outre :
facturer le service utilisateur selon le prix correspondant au niveau de service sélectionné par le terminal utilisateur.

5. Procédé selon la revendication 4, comprenant en outre l'étape suivante :
sélectionner, à partir des niveaux de service sélectionnés qui sont égaux ou supérieurs aux niveaux de service définis dans le SLA de service, les niveaux de service dont les prix sont inférieurs ou égaux à un prix correspondant au niveau de service dans le SLA de service.

6. Procédé selon la revendication 4, comprenant en outre les étapes suivantes :
fixer une longueur de temps pour chaque niveau de service dans la stratégie d'utilisation de ressources ;
après avoir attribué les ressources réseau pour le service utilisateur selon le niveau de service sélectionné par le terminal utilisateur, synchroniser le service utilisateur selon la longueur de temps correspondant au niveau de service sélectionné par le terminal utilisateur; lorsque le temps est écoulé, utiliser le niveau de service défini dans le SLA de service pour réattribuer les ressources réseau pour le service utilisateur.

7. Procédé selon la revendication 4, comprenant en outre les étapes suivantes :
fixer une longueur de temps pour chaque niveau de service dans la stratégie d'utilisation de ressources ;
après avoir attribué les ressources réseau pour le service utilisateur selon le niveau de service sélectionné par le terminal utilisateur, synchroniser le service utilisateur selon la longueur de temps correspondant au niveau de service sélectionné par le terminal utilisateur ; si une variation de la condition des ressources réseau excède une valeur prédéfinie, une fois le temps écoulé, sélectionner les niveaux de service correspondant au paramètre de performances réseau à partir de la stratégie d'utilisation de ressources et sélectionner les niveaux de service qui sont égaux ou supérieurs au niveau de service défini dans le SLA de service.

8. Procédé selon la revendication 6 ou 7, comprenant en outre les étapes suivantes :
si le taux d'utilisation des ressources réseau atteint une valeur prédéfinie, une fois le temps écoulé, sélectionner, à partir des niveaux de service sélectionnés qui sont égaux ou supérieurs aux niveaux de service définis dans le SLA, les niveaux de service dont les prix sont supérieurs ou égaux au prix correspondant au niveau de service fourni dans une période de temps précédente.

9. Procédé selon les revendications 1 à 8, comprenant avant le processus consistant à obtenir, les étapes suivantes :
prédéterminer, du côté réseau, les informations concernant le SLA du service utilisateur et les informations concernant la stratégie d'utilisation de ressources, les informations sur la stratégie d'utilisation de ressources comprenant le paramètre de performances réseau et le niveau de service correspondant au paramètre de performances réseau ; et le processus consistant à obtenir un paramètre de performances réseau courant comprend :
contrôler, du côté réseau, le paramètre de performances courant du réseau de communication.

10. Procédé selon la revendication 9, comprenant en outre l'étape suivante :
sélectionner, par le terminal utilisateur, un élément de niveau de service à partir des éléments de niveau de service reçus, et retourner l'élément de niveau sélectionné.

11. Système permettant d'attribuer des ressources réseau, comprenant :
un dispositif d'acquisition de performances conçu pour obtenir un paramètre de performances réseau courant, le paramètre de performances réseau courant comprenant : un paramètre de performances d'un dispositif d'accès dans une cellule du terminal utilisateur, un paramètre de performances d'un réseau support et un paramètre de performances d'un serveur d'applications correspondant au service utilisateur ;
une base de données de contrats de niveau de service, SLA, utilisateur conçue pour stocker un SLA de service souscrit par un utilisateur auprès d'un fournisseur de services réseau ;
une base de données de stratégies conçue pour stocker une stratégie d'utilisation de ressources comprenant le paramètre de performances réseau et un niveau de service correspondant au paramètre de performances réseau ; et
un dispositif de négociation conçu pour obtenir le SLA de service et la stratégie d'utilisation de ressources à partir de la base de données de SLA utilisateur et la base de données de stratégies respectivement et sélectionner, à partir de la stratégie d'utilisation de ressources, le niveau de service qui est égal ou supérieur au niveau de service dans le SLA de service souscrit par l'utilisateur auprès du fournisseur de services réseau selon le paramètre de performances réseau courant, puis envoyer le niveau de service sélectionné à un contrôleur de serveur d'applications;
le contrôleur de serveur d'applications étant adapté pour envoyer le niveau de service sélectionné par le dispositif de négociation à un terminal utilisateur pour négocier et attribuer des ressources réseau à l'utilisateur selon le niveau de service obtenu par l'intermédiaire de la négociation avec le terminal utilisateur.

12. Système permettant d'attribuer des ressources réseau selon la revendication 11, le contrôleur de serveur d'applications étant en outre adapté pour envoyer le niveau de service qui est obtenu par l'intermédiaire de la négociation avec le terminal utilisateur au dispositif de négociation ;
le dispositif de négociation étant adapté pour générer une commande de configuration de ressources selon le niveau de service qui est obtenu par l'intermédiaire de la négociation avec le terminal utilisateur et envoyer la commande de configuration de ressources au contrôleur de serveur d'applications ;
et le contrôleur de serveur d'applications étant adapté pour attribuer des ressources réseau aux utilisateurs selon la commande de configuration de ressources.

13. Système permettant d'attribuer des ressources réseau selon la revendication 11. comprenant en outre :
un système de support métier, BSS, conçu pour facturer le service utilisateur selon le niveau de service négocié, sous le contrôle du contrôleur de serveur d'applications.

14. Système permettant d'attribuer des ressources réseau selon la revendication 12, comprenant en outre :
un système de support métier, BSS, conçu pour facturer le service utilisateur selon le niveau de service négocié, sous le contrôle du dispositifde négociation.

15. Système permettant d'attribuer des ressources réseau selon l'une quelconque des revendications 11 à 14, comprenant en outre :
une base de données de données de performances conçue pour stocker le paramètre de performances réseau courant obtenu par le dispositif d'acquisition de performances ; et le dispositif de négociation étant en outre conçu pour obtenir le paramètre de performances réseau courant à partir de la base de données de données de performances.

16. Dispositif de négociation, comprenant:
un module d'obtention conçu pour obtenir un paramètre de performances réseau courant, un contrat de niveau de service, SLA, de services et une stratégie d'utilisation de ressources, le niveau de service étant obtenu à partir d'une base de données de SLA utilisateur qui stocke les SLA souscrits par les utilisateurs auprès d'un fournisseur de services réseau, le paramètre de performances réseau courant comprenant : un paramètre de performances d'un dispositif d'accès dans une cellule du terminal utilisateur, un paramètre de performances d'un réseau support et un paramètre de performances d'un serveur d'applications correspondant au service utilisateur ;
un module de traitement conçu pour sélectionner, à partir de la stratégie d'utilisation de ressources, un niveau de service qui est égal ou supérieur à un niveau de service dans le SLA de service souscrit par l'utilisateur auprès du fournisseur de services réseau selon le paramètre de performances réseau courant, et envoyer le niveau de service sélectionné pour négocier avec un terminal utilisateur sur le niveau de service.

17. Dispositif de négociation selon la revendication 16,
le module de traitement étant en outre conçu pour générer une commande de configuration de ressources selon le niveau de service qui est obtenu par l'intermédiaire de la négociation avec le terminal utilisateur et envoyer la commande de configuration de ressources à un contrôleur de serveur d'applications.
